# FASCICULE DE BREVET EUROPEEN

(11) **EP 0 461 979 B1**
(45) Date de publication et mention de la délivrance du brevet: **06.04.1994**
(21) Numéro de dépôt: 91401520.1
(22) Date de dépôt: 10.06.1991
(51) Int. Cl.: F17C 1/16, B29C 65/34

(54) **Réservoir pour le stockage d'un fluide sous pression et son procédé de fabrication**
Speicherbehälter für Druckfluidum und seine Herstellung
Pressurised fluid storage tank and its manufacture

(30) Priorité: 12.06.1990 FR 9007268
(43) Date de publication de la demande: 18.12.1991
(73) Titulaire: AEROSPATIALE Société Nationale Industrielle, 75781 Paris Cédex 16 (FR)
(72) Inventeur: Phan, Albert, F-33160 Saint-Médard-en-Jalles (FR); Tisne, Jean-Louis, F-33127 Martignas (FR); Guihou, Serge, F-33200 Bordeaux (FR)
(74) Mandataire: Bonnetat, Christian

(56) Documents cités:
- FR-A- 1 372 120
- FR-A- 2 002 497
- FR-A- 2 164 548
- US-A- 2 799 435
- US-A- 3 098 578
- US-A- 3 124 001

## Description

La présente invention concerne un réservoir pour le stockage d'un fluide sous pression, ainsi que son procédé de fabrication.

On connaît déjà, par exemple par le brevet américain US-A-3 508 677 ou par le brevet français FR-A-2 630 810, un réservoir pour le stockage de fluide sous pression, comprenant, d'une part, une enveloppe intérieure de forme de révolution autour d'un axe longitudinal présentant une partie cylindrique et deux parties d'extrémité, au moins une desdites parties d'extrémité étant bombée vers l'extérieur et comportant un goulot, et, d'autre part, un frettage de fibres (verre, carbone, kevlar (marque déposée), bore, etc...) enrobées d'un liant durcissable entourant complètement ladite enveloppe, tout en laissant dégagé ledit goulot.

Dans un tel réservoir connu, ladite enveloppe intérieure sert de mandrin d'enroulement pour ledit frettage de fibres et, afin de réaliser ledit frettage de façon aisée par enroulement, ledit liant est choisi de type thermodurcissable. Ainsi, dans un processus de fabrication de tels réservoirs, il est nécessaire de prévoir autant de mandrins que de réservoirs à réaliser et de soumettre chaque réservoir à des traitements de longue durée à température élevée pour obtenir un durcissement (polymérisation) approprié dudit liant thermodurcissable.

Ces réservoirs connus sont donc coûteux. En revanche, ils présentent des performances élevées et peuvent résister à des pressions intérieures élevées, de plusieurs centaines de bars.

Cependant, lorsque l'on désire obtenir des réservoirs de performance moindres, par exemple résistant seulement à des pressions internes de quelques dizaines de bars, il n'est pas économiquement avantageux de prévoir, pour ces réservoirs moins performants, la structure des réservoirs connus décrits ci-dessus.

Par ailleurs, par exemple par la demande brevet internationale WO-A-84 00351 et par le brevet français FR-A-2 579 130, on connaît déjà des méthodes de réalisation de corps creux par enroulement de fibres enrobées de liant thermoplastique. Dans ces méthodes connues, les fibres enrobées de liant thermoplastique (donc peu souple à la température ambiante) sont enroulées sur un mandrin en subissant l'action d'un dispositif de chauffage suiveur, les portant à fusion partielle au voisinage du mandrin afin de faciliter leur enroulement sur ledit mandrin en les assouplissant et/ou d'assurer la solidarisation par soudage des spires consécutives de l'enroulement. Il est évident que l'apport de chaleur engendré par ce dispositif de chauffage suiveur doit être précis, afin que la fusion partielle des fibres enrobées du liant thermoplastique soit suffisamment élevée pour permettre leur enroulement et/ou le soudage desdites spires, sans toutefois être excessive, pour ne pas détériorer lesdites fibres. Le réglage de cet apport de chaleur est relativement simple à obtenir lorsque la vitesse d'application des fibres est constante, par exemple lors de la réalisation d'un corps creux tubulaire, mais devient impossible lorsque cette vitesse d'application varie, ce qui serait le cas pour la formation de fonds d'un réservoir par enroulement.

Dans ces conditions, il n'est possible, par cette technique connue, que de réaliser des tubes. De plus, la mise en oeuvre de cette technique connue nécessite l'emploi de mandrins creux restant prisonniers des tubes après bobinage des fibres enrobées du liant thermoplastique ou de mandrins pleins devant être détruits après ce bobinage. Dans les deux cas, il faut construire autant de mandrins que de tubes à réaliser.

L'objet de la présente invention est de permettre la réalisation de réservoirs (et non pas de simples tubes) en matière composite fibres-liant thermoplastique, sans recours à l'utilisation de mandrins perdus.

A cette fin, selon l'invention, le réservoir pour le stockage de fluide sous pression présentant un axe longitudinal et comportant une partie centrale tubulaire obturée à ses extrémités par deux fonds, dont l'un au moins est bombé vers l'extérieur et est pourvu d'un goulot, est remarquable en ce qu'il est constitué par une enveloppe tubulaire de matière composite fibres-liant thermoplastique et de deux pièces d'extrémité de matière thermoplastique chargée de fibres de renfort, ladite enveloppe et lesdites pièces d'extrémité étant solidaires les unes des autres par des zones locales thermofondues.

Ainsi, le réservoir conforme à la présente invention peut être réalisé par solidarisation, par thermosoudage, de trois pièces de matière composite fibres-liant thermoplastique, à savoir l'enveloppe tubulaire (destinée à former ladite partie centrale tubulaire) et les deux pièces d'extrémité (destinées à former lesdits fonds). Il en résulte que lesdites pièces d'extrémité peuvent être réalisées de toute façon connue, par exemple par injection, ce qui élimine l'inconvénient mentionné ci-dessus à propos du dispositif de chauffage suiveur. Grâce au fait que ces trois pièces sont réalisées en une matière composite fibres-liant thermoplastique, leur assemblage par thermofusion est particulièrement résistant et étanche, de sorte que, bien que constitué de trois pièces, le réservoir de l'invention se comporte comme s'il était monopièce.

Avantageusement, chaque zone locale thermofondue de solidarisation entre ladite enveloppe et une desdites pièces d'extrémité est annulaire et coaxiale audit axe longitudinal.

Le goulot peut être formé dans ladite pièce d'extrémité constituant ledit fond bombé. En variante, ledit goulot peut être formé par une pièce annulaire solidarisée de ladite pièce d'extrémité constituant ledit fond bombé. De préférence, afin de permettre la fixation d'un dispositif d'obturation dudit goulot sur ledit réservoir, des inserts sont partiellement noyés dans ladite pièce d'extrémité constituant ledit fond bombé.

Afin que le thermosoudage des trois pièces constituant le réservoir conforme à l'invention soit optimal, le liant thermoplastique de la matière composite constituant ladite enveloppe tubulaire et la matière thermoplastique des deux pièces d'extrémité sont de même nature. Par exemple, ledit liant thermoplastique et ladite matière thermoplastique sont en polyamide.

Pour pouvoir réaliser, en une matière composite constituée de fibres enrobées d'un liant, un réservoir pour le stockage de fluide sous pression, ledit réservoir présentant un axe longitudinal et comportant une partie centrale tubulaire obturée à ses extrémités par deux fonds, dont l'un au moins est bombé vers l'extérieur et est pourvu d'un goulot, il est avantageux, selon la présente invention, d'effectuer les opérations suivantes :
- sur un mandrin, dont la surface extérieure correspond à la surface intérieure de ladite partie centrale tubulaire, on réalise une enveloppe par enroulement d'un ruban d'une matière composite constituée de fibres enrobées d'un liant de matière thermoplastique, ledit ruban étant porté à fusion partielle par chauffage au moment de son enroulement ;
- on dégage ladite enveloppe dudit mandrin et on la coupe à une longueur correspondant à celle de ladite partie centrale tubulaire ;
- par ailleurs, on réalise, à la forme desdites parties d'extrémité, deux pièces de matière thermoplastique chargée de fibres de renfort ;
- on assemble lesdites pièces de matière thermoplastique aux extrémités de ladite enveloppe ; et
- on rend solidaires les unes des autres par thermofusion locale lesdites pièces de matière thermoplastique renforcée de fibres et ladite enveloppe de matière composite fibres-liant de matière thermoplastique.

Afin de faciliter la séparation de ladite enveloppe et du mandrin (et donc permettre la réutilisation de celui-ci pour la fabrication d'autres réservoirs), il est préférable que, préalablement à l'enroulement dudit ruban de matière composite fibres-liant de matière thermoplastique sur ledit mandrin, on enroule sur ledit mandrin un ruban de matière thermoplastique souple, non pourvu de fibres, de façon à recouvrir la totalité de la surface du mandrin sur laquelle est enroulé ultérieurement ledit ruban de matière composite fibres-liant de matière thermoplastique. Ainsi, l'enroulement formé par le second ruban, rendu solidaire de ladite enveloppe par thermosoudage lors de la réalisation de celle-ci par bobinage, forme une interface de glissement entre le mandrin et ladite enveloppe,constituant ainsi une pellicule d'étanchéité interne au réservoir.

Avantageusement, chacune desdites pièces de matière thermoplastique (de préférence obtenue par injection) comporte une virole permettant son emboîtement à frottement dur à l'extrémité correspondante de ladite enveloppe de matière composite fibres-liant de matière thermoplastique. La thermofusion locale, destinée à solidariser chaque pièce de matière thermoplastique de l'extrémité correspondante de ladite enveloppe de matière composite fibres-liant de matière thermoplastique, est alors réalisée entre ladite virole de ladite pièce et la surface en regard de ladite enveloppe.

Cette thermofusion locale est, de préférence, obtenue par l'intermédiaire d'une résistance électrique entourant ladite virole et disposée entre celle-ci et la surface en regard de ladite enveloppe, lorsque ladite virole est emboîtée sur l'extrémité correspondante de ladite enveloppe. Une telle résistance électrique peut présenter la forme d'un grillage ou toile souple. Elle est enroulée sur ladite virole avant emboîtement de la pièce dans l'extrémité correspondante de ladite enveloppe, après quoi on procède audit emboîtement avec l'aide d'un traitement thermique.

Grâce à un tel traitement thermique, qui permet la contraction et/ou la dilatation des pièces à emboîter, il est possible de réaliser l'assemblage à force desdites pièces, de sorte que chacune desdites résistances électriques est pressée radialement entre la pièce d'extrémité correspondante et l'enveloppe. Il en résulte que le thermosoudage peut alors être optimal.

Les figures du dessin annexé feront bien comprendre comment l'invention peut être réalisée. Sur ces figures, des références identiques désignent des éléments semblables.

La figure 1 montre, en coupe longitudinale, deux exemples de réalisation du réservoir conforme à la présente invention.

La figure 2 est une vue en bout du réservoir de la figure 1, du côté du goulot.

Les figures 3,4 et 5 illustrent des phases successives de la réalisation du réservoir des figures 1 et 2.

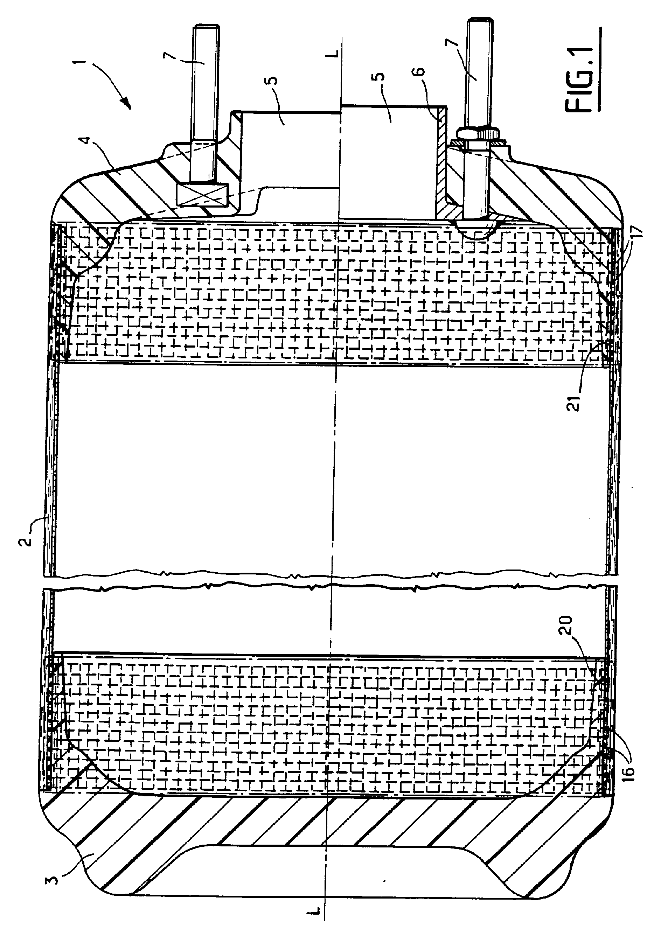

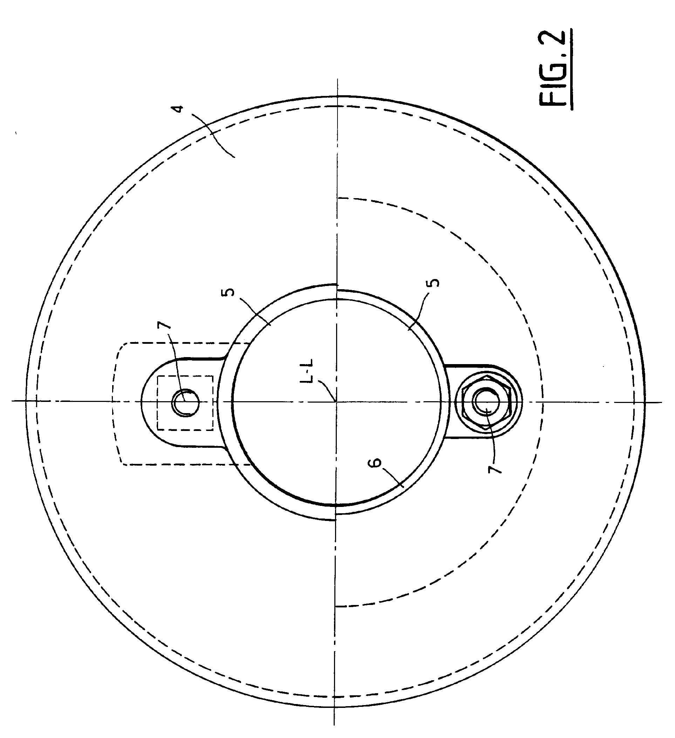

Le réservoir 1, conforme à l'invention et illustré sur les figures 1 et 2, est par exemple destiné à former le corps d'un extincteur à eau ou à poudre devant résister à une pression de service égale à une vingtaine de bars.

Le réservoir 1 est de forme essentiellement cylindrique autour d'un axe longitudinal L-L et il comporte une partie centrale tubulaire cylindrique 2 obturée à ses extrémités par deux fonds, respectivement 3 et 4. Le fond avant 4 est bombé vers l'extérieur et il est pourvu d'un goulot 5.

Sur la demi vue supérieure des figures 1 et 2, on a représenté un mode de réalisation dans lequel le goulot 5 fait partie intégrante du fond avant 4 et est formé dans la matière de celui-ci. En revanche, la demi vue inférieure des figures 1 et 2 illustre un mode de réalisation dans lequel le goulot 5 est constitué par une pièce annulaire 6, rapportée audit fond avant 4 et solidarisée de façon étanche de celui-ci.

Des inserts métalliques 7 sont solidaires dudit fond avant 4 et sont destinés à la fixation d'un dispositif (non représenté) pour l'obturation commandable du goulot 5.

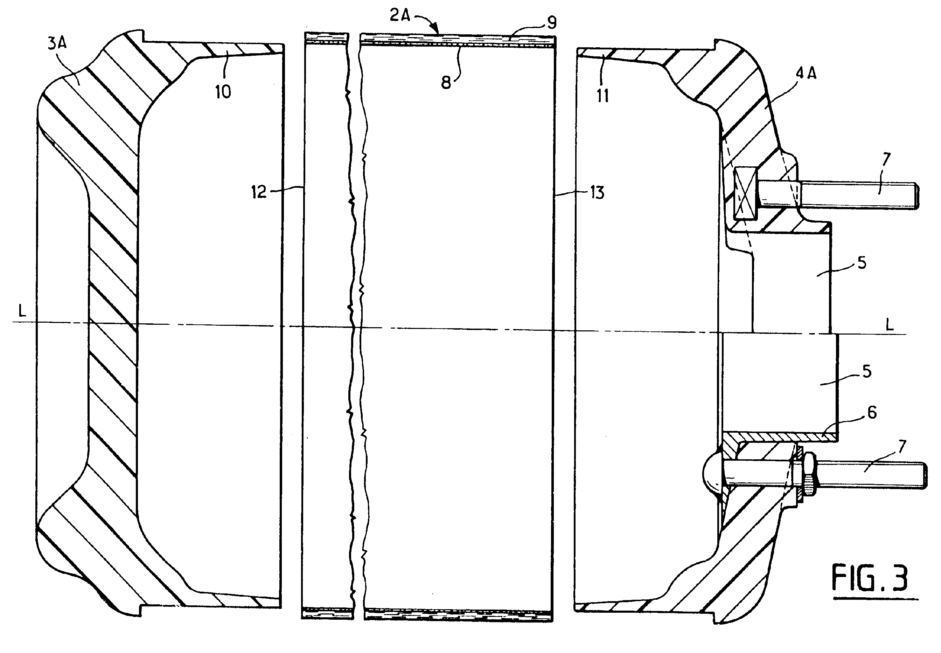

Comme le montrent les figures 3 à 5, le réservoir 1 est constitué par l'assemblage et la solidarisation d'une enveloppe tubulaire cylindrique 2A (destinée à former la partie centrale tubulaire 2) et de deux pièces d'extrémité 3A et 4A (respectivement destinées à former le fond arrière 3 et le fond avant 4).

Pour obtenir l'enveloppe tubulaire cylindrique 2A, on commence par en rouler sur un mandrin cylindrique, par exemple en aluminium, un premier ruban souple de matière thermoplastique, par exemple en polyamide, de façon à former une sous-couche 8 recouvrant, sans lacune, la surface dudit mandrin. A cet effet, l'enroulement dudit premier ruban souple est par exemple réalisé par enroulement hélicoïdal à spires jointives en au moins une épaisseur. Une telle opération d'enroulement est bien connue dans la technique, de sorte qu'elle n'est pas illustrée sur les dessins, qui ne montrent pas non plus ledit mandrin. Ensuite, sur la sous-couche 8 maintenue en place sur le mandrin, on enroule un second ruban de matière thermoplastique (par exemple également en polyamide), ce second ruban incorporant des fibres, par exemple de verre, pour obtenir une couche superficielle 9. L'enroulement du second ruban est effectué tout en amenant sa matière thermoplastique à fusion, comme cela est décrit par exemple dans le brevet français FR-A-2 579 130. La fusion de la matière thermoplastique du second ruban permet d'assurer le thermosoudage dudit second ruban sur lui-même, ainsi que le thermosoudage des spires du premier ruban entre elles. La couche superficielle 9 est avantageusement constituée de plusieurs épaisseurs d'enroulement dudit second ruban.

Après réalisation des couches 8 et 9 ainsi solidarisées l'une de l'autre, l'ensemble de ces couches 8 et 9 est séparé dudit mandrin d'enroulement et coupé à longueur pour former l'enveloppe tubulaire cylindrique 2A. On remarquera que, grâce à la sous-couche 8, la séparation d'avec le mandrin est aisée, par translation longitudinale, la sous-couche 8 permettant le glissement des couches 8,9 sur ledit mandrin. Celui-ci peut donc être réutilisé pour la réalisation d'autres enveloppes tubulaires cylindriques semblables à l'enveloppe 2A.

Les pièces 3A et 4A sont de préférence obtenues par moulage par injection de matière thermoplastique (par exemple un polyamide). Un tel moulage par injection est bien connu dans la technique et n'est donc pas représenté sur les figures. Afin d'obtenir la résistance mécanique à la pression souhaitée, on introduit dans le moule d'injection des fibres de renfort (par exemple de verre), avant injection de la matière thermoplastique. De telles fibres de renfort peuvent être, selon les buts recherchés, courtes ou longues ; elles peuvent être réparties de façon aléatoire ou au contraire organisée. Dans ce dernier cas, il est alors avantageux de disposer des pièces tissées dans le moule d'injection. Les inserts 7, ainsi que l'éventuelle pièce annulaire 6, sont également disposés dans le moule d'injection, avant l'injection de la matière thermoplastique, afin d'être au moins en partie noyés par cette matière thermoplastique et être rendus solidaires desdites pièces 3A et 4A.

Comme on peut le voir sur les figures, chacune des pièces 3A et 4A comporte une virole, respectivement 10 et 11, permettant son emboîtement sur une extrémité, 12 ou 13, de l'enveloppe 2A. Sur les figures, on a représenté le cas où les viroles 10 et 11 sont destinées à pénétrer dans les extrémités 12 et 13, mais on comprendra que cette disposition, quoique avantageuse, n'est pas exclusive : en effet, on peut également réaliser les viroles 10 et 11 de façon que ce soit les extrémités 12 et 13 de l'enveloppe 2A qui pénètrent dans elles. Il suffirait alors de disposer les résistances de thermofusion décrites ci-après, non plus sur lesdites viroles 10 et 11, mais sur lesdites extrémités 12 et 13 de l'enveloppe 2A.

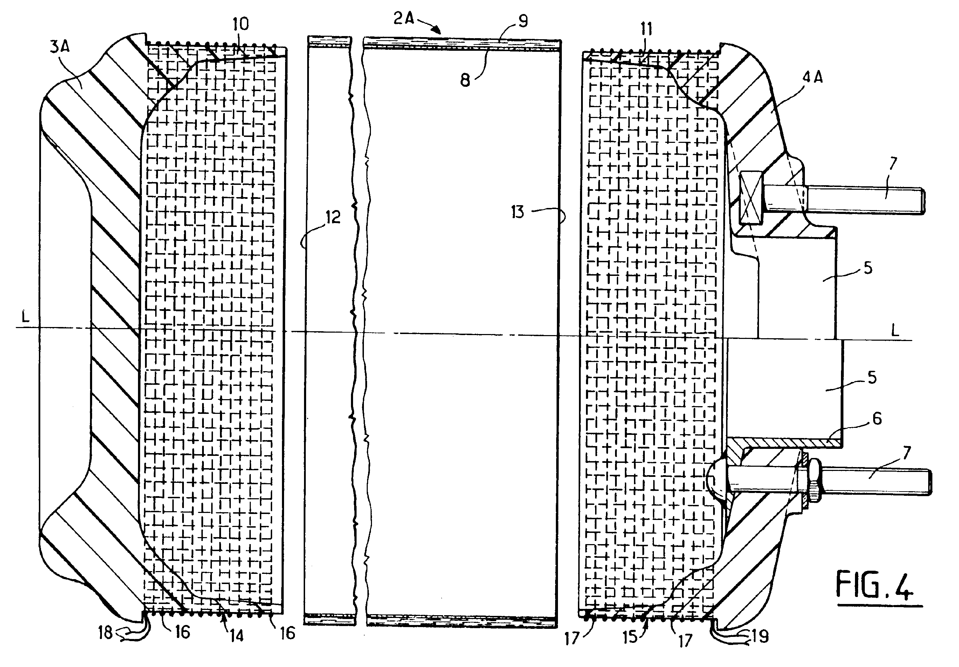

Comme le montre la figure 4, sur les surfaces cylindriques extérieures 14 et 15 des viroles 10 et 11, on dispose des résistances électriques, respectivement, 16 et 17. De telles résistances électriques pourraient être obtenues par enroulement hélicoïdal d'un fil électriquement résistant. Cependant, il est avantageux que les résistances électriques 16 et 17 présentent la structure d'une toile (ou grillage) métallique, comme représenté, lesdites toiles s'appliquant sur la totalité des surfaces cylindriques 14, 15 desdites viroles 10 et 11. Les résistances électriques 16 et 17 peuvent être reliées à une source de courant extérieure (non représentée), respectivement par des conducteurs de liaison 18 et 19.

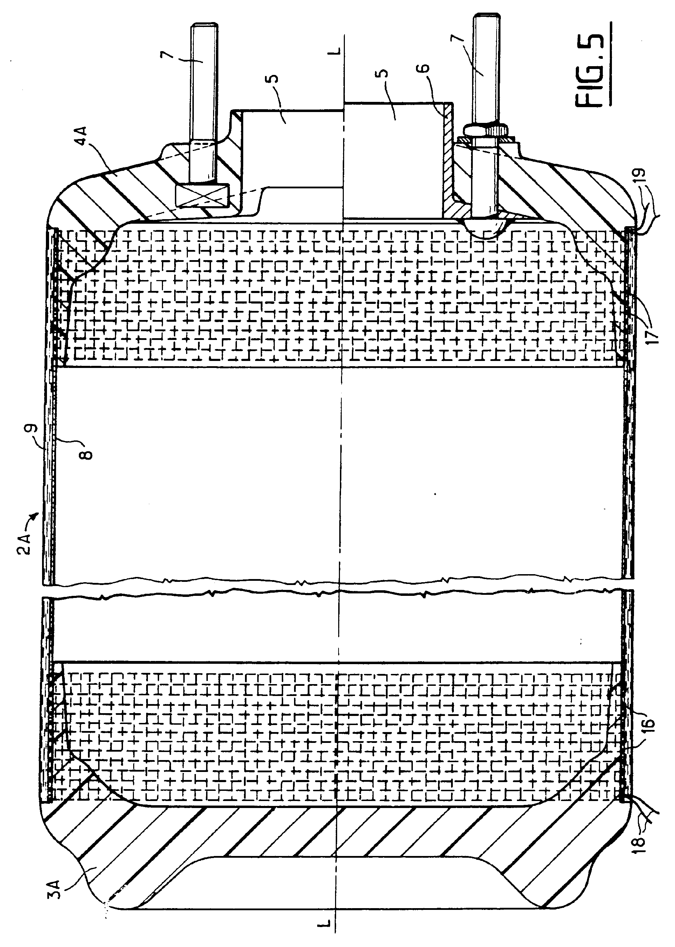

Après mise en place des résistances 16 et 17 sur les surfaces cylindriques extérieures 14 et 15 des viroles 10 et 11, le diamètre desdites surfaces 14 et 15, augmenté de l'épaisseur desdites résistances 16 et 17, est sensiblement égal au diamètre interne de l'enveloppe 2A. Aussi pour faciliter l'introduction desdites viroles, revêtues de leur résistance respective, à l'intérieur des extrémités 12 et 13 de l'enveloppe 2A, on applique un traitement thermique à l'enveloppe 2A et/ou aux pièces 3A et 4A. Par exemple, l'enveloppe 2A est portée à 100°C (donc elle se dilate), tandis que les pièces 3A et 4A sont portées à -18°C (donc elles se rétractent). Il est alors possible d'emboîter les viroles 10 et 11 (pourvues de résistances 16 et 17) dans les extrémités 12 et 13 de l'enveloppe 2A (voir la figure 5), les conducteurs de liaison 18 et 19 restant accessibles de l'extérieur.

Grâce à un tel emboîtement, les résistances 16 et 17 sont pressées entre lesdites viroles 10 et 11 et la paroi interne de l'enveloppe 2A.

On alimente ensuite les résistances 16 et 17, en les reliant à ladite source de courant par l'intermédiaire des conducteurs de liaison 18 et 19. Les résistances 16 et 17 s'échauffent et amènent à fusion la matière thermoplastique superficielle en regard des viroles 10 et 11 et de l'enveloppe 2A. Après un tel échauffement, les viroles pièces 3A et 4A sont donc rendues solidaires de l'enveloppe 2A par thermosoudage, par l'intermédiaire de zones locales cylindriques thermofondues (puis resolidifiées) 20 et 21, entourant les résistances 16 et 17 (voir la figure 1).

S'ils n'ont pas été détruits par le passage du courant, les conducteurs de liaison 18 et 19 sont alors arasés. On remarquera que les résistances 16 et 17 restent prisonnières du réservoir 1, constituant alors une armature de renfort pour les fonds 3 et 4.

Ainsi, grâce à l'invention, on peut obtenir des réservoirs légers (dont la masse peut être inférieure de 50% à celle de réservoirs métalliques de même volume et de même résistance à la pression). On remarquera que, avec les mêmes fonds 3 et 4, mais avec des longueurs d'enveloppe 2A différentes, il est possible d'obtenir des réservoirs de volumes différents, avec un outillage identique.

Bien que l'exemple décrit concerne plus particulièrement un corps d'extincteur, il va de soi que la présente invention peut être mise en oeuvre pour la fabrication de réservoirs susceptibles de nombreuses utilisations, comme par exemple les bouteilles de gaz domestiques.

## Revendications

1. Réservoir (1) pour le stockage de fluide sous pression présentant un axe longitudinal (L-L) et comportant une partie centrale tubulaire (2) obturée à ses extrémités par deux fonds (3,4), dont l'un (4) au moins est bombé vers l'extérieur et est pourvu d'un goulot (5), caractérisé en ce qu'il est constitué par une enveloppe (2A) tubulaire de matière composite fibres-liant thermoplastique et de deux pièces d'extrémité (3A,4A) de matière thermoplastique chargée de fibres de renfort, ladite enveloppe et lesdites pièces d'extrémité constituant ladite partie centrale tubulaire (2) et lesdits fonds (3,4) et étant solidaires les unes des autres par des zones locales thermofondues (20,21), chaque zone locale thermofondue (20,21) de solidarisation entre ladite enveloppe et une desdites pièces d'extrémité étant annulaire et coaxiale audit axe longitudinal (L-L).

2. Réservoir selon la revendication 1,
caractérisé en ce que ledit goulot (5) est formé dans ladite pièce d'extrémité (4) constituant ledit fond bombé.

3. Réservoir selon la revendication 1,
caractérisé en ce que ledit goulot (5) est formé par une pièce annulaire (6) solidarisée de ladite pièce d'extrémité constituant ledit fond bombé.

4. Réservoir selon l'une quelconque des revendications 1 à 3,
caractérisé en ce que des inserts (7) sont partiellement noyés dans ladite pièce d'extrémité constituant ledit fond bombé.

5. Réservoir selon l'une quelconque des revendications 1 à 4,
caractérisé en ce que le liant thermoplastique de la matière composite constituant ladite enveloppe tubulaire (2A) et la matière thermoplastique des deux pièces d'extrémité (3A,4A) sont de même nature.

6. Réservoir selon la revendication 5,
caractérisé en ce que ledit liant thermoplastique et ladite matière thermoplastique sont en polyamide.

7. Procédé pour la réalisation, en une matière composite constituée de fibres enrobées d'un liant, d'un réservoir (1) pour le stockage de fluide sous pression, ledit réservoir présentant un axe longitudinal (L-L) et comportant une partie centrale tubulaire (2) obturée à ses extrémités par deux fonds (3,4), dont l'un au moins (4) est bombé vers l'extérieur et est pourvu d'un goulot (5),
caractérisé en ce que l'on effectue les opérations suivantes :
- sur un mandrin, dont la surface extérieure correspond à la surface intérieure de ladite partie centrale tubulaire (2), on réalise une enveloppe (2A) par enroulement d'un ruban d'une matière composite constituée de fibres enrobées d'un liant de matière thermoplastique, ledit ruban étant porté à fusion partielle par chauffage au moment de son enroulement ;
- on dégage ladite enveloppe (2A) dudit mandrin et on la coupe à une longueur correspondant à celle de ladite partie centrale tubulaire ;
- par ailleurs, on réalise, à la forme desdites parties d'extrémité (3,4), deux pièces (3A,4A) de matière thermoplastique chargée de fibres de renfort ;
- on assemble lesdites pièces de matière thermoplastique (3A,4A) aux extrémités de ladite enveloppe (2A) ; et
- on rend solidaires les unes des autres, par thermofusion de zones locales (20,21) annulaires et coaxiales audit axe longitudinal, lesdites pièces (3A,4A) de matière thermoplastique renforcée de fibres et ladite enveloppe (2A) de matière composite fibres-liant de matière thermoplastique.

8. Procédé selon la revendication 7,
caractérisé en ce que, préalablement à l'enroulement dudit ruban de matière composite fibres-liant de matière thermoplastique sur ledit mandrin, on enroule sur ledit mandrin un ruban (8) de matière thermoplastique souple, non pourvu de fibres, de façon à recouvrir la totalité de la surface du mandrin sur laquelle est enroulé ultérieurement ledit ruban de matière composite fibres-liant de matière thermoplastique.

9. Procédé selon l'une des revendications 7 ou 8,
caractérisé en ce que lesdites pièces de matière thermoplastique (3A,4A) sont réalisées par injection.

10. Procédé selon l'une quelconque des revendications 7 à 9,
caractérisé en ce que chacune desdites pièces de matière thermoplastique (3A,4A) comporte une virole (10,11) permettant son emboîtement à frottement dur à l'extrémité correspondante de ladite enveloppe (2A) de matière composite fibres-liant de matière thermoplastique.

11. Procédé selon la revendication 10,
caractérisé en ce que la thermofusion locale, destinée à solidariser chaque pièce de matière thermoplastique de l'extrémité correspondante de ladite enveloppe de matière composite fibres-liant de matière thermoplastique, est réalisée entre ladite virole (10,11) de ladite pièce (3A,4A) et la surface en regard de ladite enveloppe (2A).

12. Procédé selon la revendication 11,
caractérisé en ce que ladite thermofusion locale est obtenue par l'intermédiaire d'une résistance électrique (16,17) entourant ladite virole (10,11) et disposée entre celle-ci et la surface en regard de ladite enveloppe, lorsque ladite virole est emboîtée sur l'extrémité correspondante de ladite enveloppe.

13. Procédé selon la revendication 12,
caractérisé en ce que ladite résistance (16,17) électrique présente la forme d'un grillage souple.

14. Procédé selon l'une des revendications 12 ou 13,
caractérisé en ce que ladite résistance (16,17) est enroulée sur ladite virole (10,11) avant emboîtement de la pièce (3A,4A) dans l'extrémité correspondante de ladite enveloppe (2A), après quoi on procède audit emboîtement avec l'aide d'un traitement thermique.

## Patentansprüche

1. Speicherungsbehälter (1) für eine Flüssigkeit unter Druck mit einer Längsachse (L-L) und einem rörhrenförmigen, an den Enden durch zwei Böden (3, 4) geschlossenen Mittelteil (2), von denen mindestens einer (4) nach außen gewölbt und mit einem engen Hals (5) versehen ist, dadurch gekennzeichnet, daß er aus einer röhrenförmigen Verkleidung (2A) aus mit thermoplastischem Bindemittel umhüllten Fasern und aus zwei Endteilen (3A, 4A) aus mit Fasern verstärktem thermoplastischem Material besteht, daß die beschriebene Verkleidung und die Endteile, die den röhrenförmigen Mittelteil (2) und die Böden (3,4) bilden, miteinander durch Thermoverschmelzung (20, 21) verbunden sind, wobei jeder thermoverschmolzene Verbindungsbereich (20, 21) zwischen der Verkleidung und einem der Endteile ringförmig und koaxial zu der beschriebenen Längsachse (L-L) ist.

2. Behälter nach Anspruch 1
dadurch gekennzeichnet, daß das den gewölbten Boden bildende Endteil (4) den engen Hals (5) aufweist.

3. Behälter nach Anspruch 1
dadurch gekennzeichnet, daß der enge Hals (5) aus einem ringförmigen Teil (6) besteht, das mit dem den gewölbten Boden bildenden Endteil verbunden ist.

4. Behälter nach einem der Ansprüche 1 bis 3
dadurch gekennzeichnet, daß die Einsätze (7) teilweise in das den gewölbten Boden bildende Endteil eingebettet sind.

5. Behälter nach einem der Ansprüche 1 bis 4
dadurch gekennzeichnet daß das thermoplastische Verbundstoffbindemittel der röhrenförmigen Verkleidung (2A) und das thermoplastische Material der beiden Endteile (3A, 4A) aus dem gleichen Material sind.

6. Behälter nach Anspruch 6
dadurch gekennzeichnet, daß sowohl das thermoplastische Bindemittel als auch das thermoplastische Material aus Polyamid sind.

7. Verfahren zur Herstellung (aus einem Verbundstoff aus mit Bindemittel umhüllten Fasern) eines Speicherungsbehälters (1) für eine Flüssigkeit unter Druck, wobei der Behälter eine Längsachse (L-L) aufweist und aus einem röhrenförmigen an den Enden durch zwei Böden (3, 4) geschlossenen Mittelteil (2) besteht, von denen mindestens einer (4) nach außen gewölbt und mit einem engen Hals (5) versehen ist, dadurch gekennzeichnet, daß die folgenden Arbeitsschritte durchgeführt werden:
- An einem Futter, dessen Außenfläche der Innenfläche des röhrenförmigen Mittelteils (2) entspricht, ist durch Wicklung eines Bandes aus einem Verbundstoff, der aus mit thermoplastischem Bindemittel umhüllten Fasern besteht, eine Verkleidung (2A) aufzutragen, wobei das Band durch Erwärmung im Moment der Wicklung teilweise geschmolzen wird;
- Die Verkleidung (2A) des Futters ist zu entfernen und auf eine dem röhrenförmigen Mittelteil entsprechende Länge zu schneiden
- Weiterhin sind in der Form der Endteile (3, 4) zwei Teile (3A, 4A) aus mit Fasern verstärktem thermoplastischem Material herzustellen.
- Die aus dem thermoplastischen Material bestehenden Teile (3A, 4A) sind an den Enden der Verkleidung (2A) zu befestigen.
- Schließlich sind die Teile (3A, 4A) aus mit Fasern verstärktem thermoplastischem Material und die Verkleidung (2A) aus mit thermoplastischem Bindemittel umhüllten Fasern miteinander durch Thermoverschmelzung der ringförmig und koaxial zu der Längsachse liegenden Bereiche (20,21) zu verbinden.

8. Verfahren nach Anspruch 7
dadurch gekennzeichnet, daß bevor das Band aus mit thermoplastischem Bindemittel umhüllten Fasern um das Futter gewickelt wird, dieses Futter mit einem Band (8) aus faserfreiem, elastischem, thermoplastischem Material umwickelt wird, so daß die gesamte Fläche des Futters, das später mit den mit thermoplastischem Bindemittel umhüllten Fasern umwickelt wird, bedeckt ist.

9. Verfahren nach einem der Ansprüche 7 oder 8
dadurch gekennzeichnet, daß die Teile aus thermoplastischem Material (3A, 4A) mittels Injektion hergestellt werden.

10. Verfahren nach einem der Ansprüche 7 bis 9
dadurch gekennzeichnet, daß jedes der Teile aus thermoplastischem Material (3A, 4A) einen Ring (10, 11) für das Einstecken an dem entsprechenden Ende der Verkleidung aus mit thermoplastischem Bindemittel umhüllten Fasern aufweist.

11. Verfahren nach Anspruch 10
dadurch gekennzeichnet, daß die Thermoverschmelzung, durch die jedes Teil aus thermoplastischem Material mit dem jeweiligen Ende der Verkleidung aus mit thermoplastischem Bindemittel umhüllten Fasern verbunden wird, zwischen dem Ring (10, 11) des Teils (3A, 4A) und der Fläche gegenüber der Verkleidung erfolgt.

12. Verfahren nach Anspruch 11
dadurch gekennzeichnet, daß die Thermoverschmelzung über einen elektrischen Widerstand (16, 17) erfolgt, der den Ring (10, 11) umgibt und der sich zwischen diesem und der der Verkleidung gegenüberliegenden Fläche befindet, wobei der Ring in das jeweilige Ende der Verkleidung eingebettet ist.

13. Verfahren nach Anspruch 12
dadurch gekennzeichnet, daß der elektrische Widerstand (16, 17) die Form eines elastischen Gitterwerks aufweist.

14. Verfahren nach einem der Ansprüche 12 oder 13
dadurch gekennzeichnet, daß der Widerstand (16, 17) um den Ring zu wickeln ist, bevor Teil (3A, 4A) in das entsprechende Ende der Verkleidung (2A) eingesteckt wird. Erst danach erfolgt das Einstecken mittels Warmbehandlung.

## Claims

1. A tank (1) for storing fluid under pressure, having a longitudinal axis (L-L) and comprising a tubular central part (2) closed at its ends by two ends (3, 4), at least one of which (4) is outwardly curved and is provided with a neck (5), characterised in that it is formed by a tubular casing (2A) of a composite material comprising fibres and a thermoplastic binder, and two end parts (3A, 4A) of thermoplastic material filled with reinforcing fibres, the said casing and the said end parts forming the said tubular central part (2) and the said ends (3, 4) being rigidly connected by thermofused local zones (20, 21), each thermofused local zone (20, 21) providing the connection between the said casing and one of the said end parts being annular and coaxial of the said longitudinal axis (L-L).

2. A tank according to claim 1, characterised in that the said neck (5) is formed in the said end part (4) forming the said curved end.

3. A tank according to claim 1, characterised in that the said neck (5) is formed by an annular part (6) rigidly connected to the said end part forming the said curved end.

4. A tank according to any one of claims 1 to 3, characterised in that inserts (7) are partially embedded in the said end part forming the said curved end.

5. A tank according to any one of claims 1 to 4, characterised in that the thermoplastic binder of the composite material forming the said tubular casing (2A) and the thermoplastic material of the two end parts (3A, 4A) are of the same type.

6. A tank according to claim 5, characterised in that the said thermoplastic binder and the said thermoplastic material are of polyamide.

7. A process for making a tank (1) for storing fluid under pressure, from a composite material consisting of fibres coated with a binder, the said tank having a longitudinal axis (L-L) and having a tubular central part (2) closed at its ends by two ends (3, 4) at least one of which (4) is outwardly curved and is provided with a neck (5), characterised in that the following operations are carried out:
- a casing (2A) is formed on a mandrel, the outer surface of which corresponds to the inside surface of the said tubular central part (2), by winding a strip of a composite material consisting of fibres coated with a thermoplastic binder, the said strip being brought to partial fusion by heating when it is being wound;
- the said casing (2A) is removed from the said mandrel and is cut to a length corresponding to that of the said tubular central part;
- two parts (3A, 4A) of thermoplastic material filled with reinforcing fibres are also made to the shape of the said end parts (3, 4);
- the said thermoplastic parts (3A, 4A) are connected to the ends of the said casing (2A); and
- the said parts (3A, 4A) of thermoplastic material reinforced with fibres and the said casing (2A) of composite material comprising fibres and a thermoplastic binder are rigidly connected to one another by thermofusion of local annular zones (20, 21) coaxial of the said longitudinal axis.

8. A process according to claim 7, characterised in that prior to the winding of the said strip of composite material comprising fibres and a thermoplastic binder on the said mandrel, a strip (8) of flexible thermoplastic material devoid of fibres is wound on said mandrel so as to cover all the surface of the mandrel over which the said strip of composite material comprising fibres and thermoplastic binder is wound subsequently.

9. A process according to claim 7 or 8, characterised in that the said parts of thermoplastic material (3A, 4A) are produced by injection.

10. A process according to any one of claims 7 to 9, characterised in that each of the said parts of thermoplastic material (3A, 4A) comprises a ring (10, 11) whereby it can be fitted with hard friction to the corresponding end of the said casing (2A) of composite material comprising fibres and thermoplastic binder.

11. A process according to claim 10, characterised in that the local thermofusion intended to connect each part of thermoplastic material to the corresponding end of the said casing of composite material comprising fibres and thermoplastic binder is carried out between the said ring (10, 11) of the said part (3A, 4A) and the facing surface of the said casing (2A).

12. A process according to claim 11, characterised in that the said local thermofusion is produced by an electrical resistor (16, 17) surrounding the said ring (10, 11) and disposed between the latter and the facing surface of the said casing when the said ring has been fitted on the corresponding end of the said casing.

13. A process according to claim 12, characterised in that the said electrical resistor (16, 17) has the form of a flexible grid.

14. A process according to claim 12 or 13, characterised in that the said resistor (16, 17) is wound on the said ring (10, 11) before the part (3A, 4A) is fitted into the corresponding end of the said casing (2A), whereafter the said fitting is carried out by means of a heat treatment.
